# EUROPEAN PATENT APPLICATION

(11) **EP 0 543 514 A2**
(43) Date of publication of application: **26.05.1993**
(21) Application number: 92309824.8
(22) Date of filing: 27.10.1992
(51) Int. Cl.: G01N 15/14

(54) **Imaging flow cytometer**

(30) Priority: 20.11.1991 JP 331282/91
(71) Applicant: TOA MEDICAL ELECTRONICS CO., LTD., Chuoku, Kobe (JP)
(72) Inventor: Kosaka, Tokihiro, Kakogawashi, Hyogoken (JP)
(74) Representative: Price, Paul Anthony King

(57) **Abstract**

The imaging flow cytometer images and analyzes particle components (such as blood and urine) in a sample liquid, or fine particles of organic high polymer in suspension or the like. A conventional particle imaging flow cytometer is modified to include an image intensifier (38) with a high speed gate function, so as to obtain a clear particle image which is not blurred. Preferably, the light source (28) produces incoherent light, e.g. the light source is a xenon lamp, so that the particle image does not have an interference fringe. Because of the high speed gate function of the image intensifier (38), it is possible to obtain, even when using a light source of long illumination time, a clear still image of a particle flowing at high speed.

## Description

The present invention relates to an imaging flow cytometer for imaging particle components in a sample liquid containing particle components such as blood and urine, or fine particles such as organic high polymer in suspension, or the like.

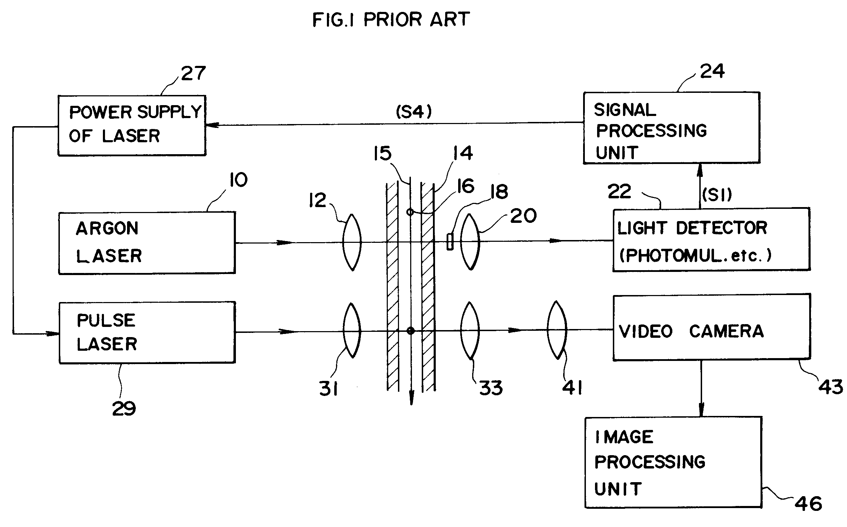

In a flow cytometer, to image particles in a sample liquid flowing at a high speed of several meters per second in a flow cell, as shown in Fig. 1, it was necessary to capture a particle image free of vibration, by combining a pulse laser light source 29 capable of emitting an intense light only for a moment and a video camera 43. In a flow cell 14, a sheath flow is formed by passing sheath liquid around the sample flow including the particles to be detected 16, and this fine sample flow 15 is illuminated with laser light from an argon laser generator 10, and the light signal (the scatter light or fluorescent light) from the particles is detected by a light detector (photomultiplier or the like) 22, and a signal S1 is sent to a signal processing unit 24 to be processed, thereby analyzing the particles. The sheath flow is a flow in which a laminar sheath liquid encloses the suspension of particles in order to position the particles neatly in a row along the middle of the liquid flow. In Fig. 1, S4 is a pulse emission trigger signal, 27 is a laser power supply, 46 is an image processing unit, 12, 31 are condenser lenses, 20, 33 are objective lenses, 41 is a projection lens, and 18 is a beam stopper.

Japanese Laid-open Patent Sho. 62-254037 discloses imaging only particles with a specific characteristic, by detecting the particles and imaging the particles with the image pickup device nearly simultaneously, by providing the flow cytometer with a streak image pickup device, and processing the imaging signal only when matched with a predetermined characteristic value. It is also disclosed to use a high sensitivity camera and a camera tube as the image pickup device, and to take the entire image instantly.

Japanese Laid-open Patent Sho. 63-94156 discloses a flow cytometer in which the light source for detecting particles is always activated, the passing of a cell is detected by a cell detector, and after delaying for a specific time in a delay circuit the light source for producing a laser pulse for imaging is turned on to image the cell.

In the conventional particle imaging flow cytometer shown in Fig. 1, since the laser light source possesses a high coherence, an interference fringe is often obvious in the obtained particle image, and the image quality is not so high. Besides, since the laser light source produces monochromatic light, a colour image of the particle is not obtained. Besides, the pulse laser light source is of gas type and is of large size, and the power source is also large and is very expensive.

By using a xenon flash lamp small in coherence as the light source, a clear image without interference fringe may be obtained, but the illumination time of the xenon flash lamp is generally long, 1 µsec. or more, and in this case the image may be smeared unless the sheath flow velocity is 0.3 m/sec. or less. At a flow velocity of 0.3 m/sec., however, the intrinsic high processing ability of the flow cytometer (that is, the large number of cells analyzed per unit of time) is not achieved.

Neither publication refers to imaging a still picture of a particle by using an image intensifier with a high speed gate, which is a feature of the present invention.

According to the present invention, there is provided an imaging flow cytometer for forming a sheath flow by passing sheath liquid around a sample flow containing particles, and for detecting a particle in the sheath flow when the particle enters a particle detection region, the cytometer comprising: a light source for imaging the particle in the sheath flow by emitting light when the particle is in an imaging region downstream of the particle detection region; a first image intensifier having a high speed gate for intensifying an image of the particle produced by the light source; first imaging means for capturing the intensified image produced by the first image intensifier; and an image processing unit for processing an image signal from the first imaging means.

The cytometer of the invention may be used to produce a clear particle image which is not blurred. This is possible because of the use of an image intensifier with a high speed gate function.

Embodiments of the invention are capable of obtaining a clear still image of a particle flowing at high speed (for example, 5 m/sec. or more) even when the light source has a long light emission time, e.g. when the light source is a lamp.

Preferably, the light source produces incoherent light (light of low coherence) so that the particle image does not have an interference fringe.

Preferably, the imaging flow cytometer further comprises a signal processing unit arranged, in response to a particle detection signal indicating detection of the particle in the particle detection region, to generate a trigger signal for activating the light source a specific time period after the particle detection signal and, while the light source is activated, to generate a gate signal for opening the gate of each image intensifier. Alternatively, the light source is arranged to be continuously activated, and the imaging flow cytometer further comprises a signal processing unit arranged, in response to a particle detection signal indicating detection of the particle in the particle detection region, to generate a gate signal for opening the gate of each image intensifier a specific time period after the particle detection signal. The specific time period is usually set to be the time required for the particle to move from the particle detection region to the imaging region.

Preferably, the imaging flow cytometer further comprises spectral means for dividing an image of the particle produced by the light source into red, green and blue images; second and third image intensifiers each having a high speed gate, the three image intensifiers being arranged to intensify respective ones of the red, green and blue images; and second and third imaging means, the three imaging means being arranged to capture the intensified images produced by respective ones of the image intensifiers; wherein the image processing unit is arranged to process red, green and blue image signals from the three imaging means. Thus, a colored image is obtained.

In addition to including the particle imaging system, the apparatus of the invention may also include the particle detection system. The particle imaging system is installed at the downstream side of the particle detection system in the sheath flow direction.

In order to obtain a clear still image of a particle flowing at high speed, the image duration must be short and a sufficient quantity of light must form the image. The image intensifier intensifies the feeble image that it receives, and produces a brighter image. The image intensifier operates as an image intensifier when its gate is open. Accordingly, it does not matter if the light source is activated for a long time, since opening and closing the gate for a short time, while the light source is activated, produces a sharp still image of the particle. Also, since the image is intensified, it is bright enough to be captured by the imaging means and processed in the image processing unit.

The invention will now be described by way of non-limiting embodiments with reference to the accompanying drawings, in which:-
Fig. 1 is a schematic explanatory diagram of a conventional apparatus;
Fig. 2 is a schematic explanatory diagram showing an embodiment of an imaging flow cytometer of the invention;
Fig. 3 is a schematic explanatory diagram showing another embodiment of an imaging flow cytometer of the invention;
Fig. 4 is a diagram for explaining the timing of each signal in an imaging flow cytometer of the invention; and
Fig. 5 is a diagram for explaining the structure and operating principle of an image intensifier.

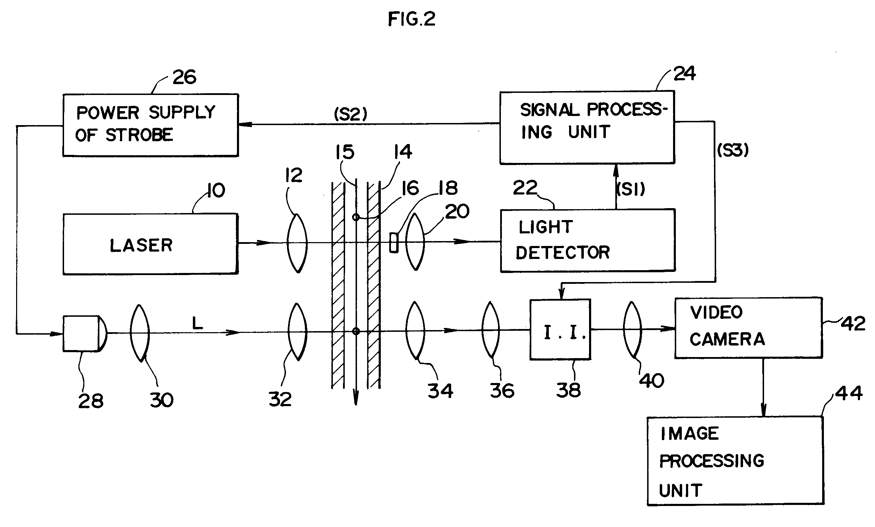

Fig. 2 shows an embodiment of an imaging flow cytometer of the invention. This apparatus is realized by combining the conventional imaging flow cytometer shown in Fig. 1 with a light source 28 for imaging a particle by emitting incoherent light, and an image intensifier 38 with a high speed gate function and on which is focused the transmission light of the particles.

As an example of the light source 28 small in coherence, a xenon lamp or halogen lamp may be used, and the lamp may be either of flash emission type or of continuous emission type.

The sample flow containing the particle to be detected 16 is led into a flow cell 14 composed of a transparent material such as glass and plastic, and a sheath liquid is supplied to cover the circumference of the sample flow, thereby forming a sheath flow. The laser light from the laser light source 10 passes to the fine sample flow 15 through the condenser lens 12. The light signal (scattered light or fluorescent light) from a particle is detected by the light detector 22 through objective lens 20 and beam stopper 18, and the signal S1 is sent to the signal processing unit 24 to be processed. A strobe luminous trigger signal S2 from the signal processing unit 24 is sent to the power supply of strobe 26 to emit the light from the light source 28 for imaging a particle, and incoherent light is emitted to the fine sample flow region, downstream of the detection region of the particle detection light, through collimator lens 30 and condenser lens 32. The transmission light from the particle passes through the objective lens 34 and projection lens 36, and is focused on the photoelectric plane (input plane) of the image intensifier 38 with high speed gate function. The image of the output plane of the image intensifier 38 passes to the video camera 42 through relay lens 40 to be captured, and the video signal is sent to the image processing unit 44 to be processed.

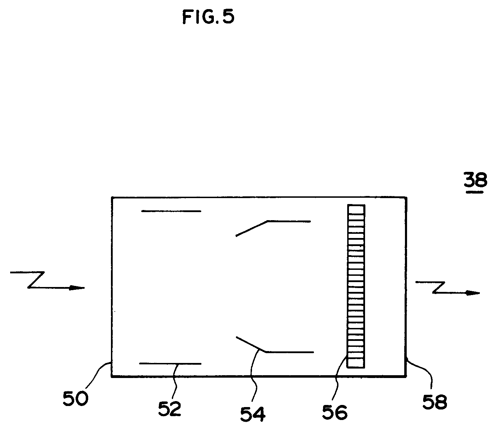

Fig. 5 is a diagram for explaining the operating principle of the image intensifier 38. The gate function of the image intensifier 38 is realized generally by polarity control of the potential of the photoelectric plane 50 against the microchannel plate (MCP) 56. That is, when the potential of the photoelectric plane 50 is positive, the photoelectron released from the photoelectric plane 50 does not reach the MCP 56, and thereby it is a shutter closed state. When the potential of the photoelectric plane 50 is negative, to the contrary, the photoelectron reaches the MCP 56, and the shutter is opened. This response of the gate function is usually as fast as several to scores of nanoseconds. Numerals 52, 54 are electronic lenses, and 58 is a fluorescent plane.

Supposing the sheath flow velocity to be 5 m/sec. and the acceptable blurring of the image to be 0.3 µm, then the exposure time of the CCD plane of the video camera is 60 nsec. or less. Hence, by setting the gate ON time below 60 nsec., a smear-free particle image is obtained.

If the image is taken by using an ordinary lamp and a video camera with a short exposure time of 60 nsec. or less, only an almost black image is obtained. However, by adding the image intensifier 38 having a light amplification power of thousands to tens of thousands of times, a bright image is obtained.

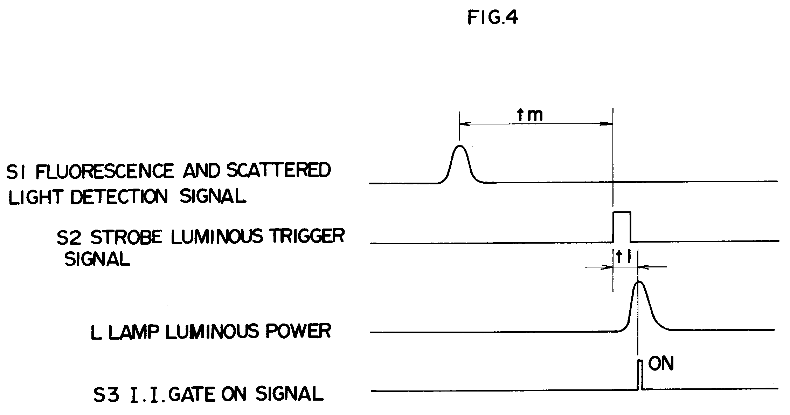

The control of the timing for turning on the gate of the image intensifier 38 is explained by reference to Fig. 4. From the scattered light or fluorescent intensity signal S1 obtained from the detection system as in the conventional flow cytometer, it is detected that the particle is passing through the detection area of the flow cell 14. Next, after waiting for the particle to reach the video camera imaging area located in the downstream direction of the detection area, the gate of the image intensifier 38 is turned on for a period of scores of nanoseconds. When using a lamp of flash emission type, first a trigger for creating the flash is applied, then the gate is turned on. The time from the issue of the trigger for the flash to when the gate of the image intensifier 38 is turned on depends on the delay time tl from the issue of the trigger to the lamp to the time when the emission intensity L reaches its peak. S2 is the strobe luminous trigger signal, S3 is the gate ON signal for the image intensifier, and tm is the time taken for the particle to move from the laser detection area to the video camera imaging area.

By turning on the gate of the image intensifier 38, photoelectrons corresponding to the particle image focused on the photoelectric plane 50 are released, and these photoelectrons reach the MCP (microchannel plate) 56 and are amplified several thousand times. The amplified photoelectrons further excite the fluorescent plane 58 which is the output plane, and a particle image amplified several thousand times is obtained. The image on the fluorescent plane 58 is focused on the CCD plane of the video camera 42 through the relay lens 40 or an optical fiber.

The video camera 42 may be of the field cumulative type or frame cumulative type depending on whether the light cumulative time is 1/60 sec. or 1/30 sec., and where the vertical resolution is more important the frame cumulative type should be used. In this case, in order to obtain a satisfactory particle still image, the exposure time by the gate function is limited to only one exposure in an even-number field period. One exposure means multiple exposures are prohibited. Therefore, all particles passing through the flow cell detection unit cannot be imaged, and the apparatus is used in applications only requiring the imaging of specific particles.

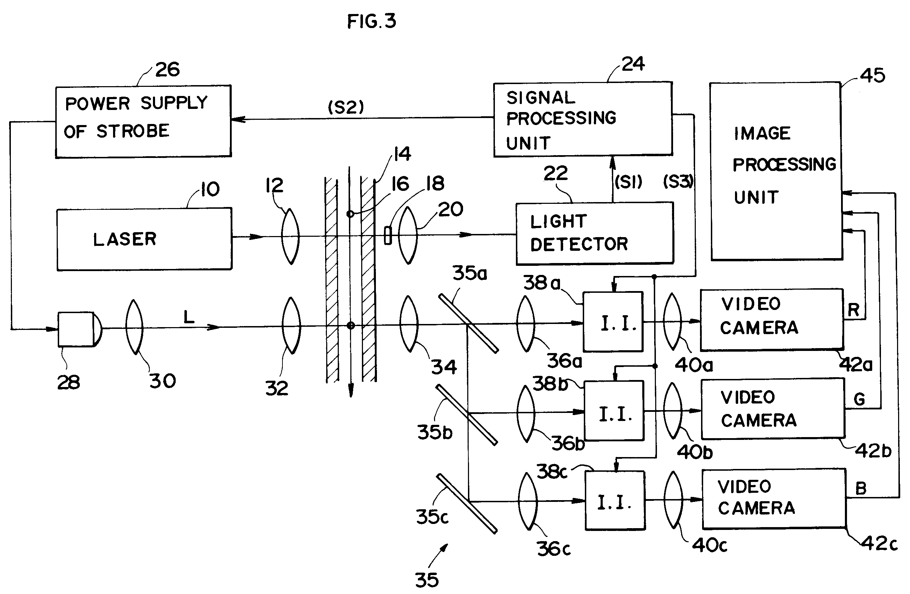

As the light source 28 for imaging the particle, by using a white light source such as xenon lamp or halogen lamp, a color particle image difficult to obtain with the conventional laser light source can be obtained. An embodiment for this purpose is shown in Fig. 3. Three sets of image intensifiers with gate function and monochromatic video cameras are provided, and filters or prisms for separating (resolving) the light from the particle into the three primary colors of red, green and blue are disposed before the input planes of the individual image intensifiers 38a, 38b, 38c, and the image is amplified for each color and is captured by the video cameras 42a, 42b, 42c. The video signals from the individual video cameras are obtained as color video signals of R (red), G (green) and B (blue). Numerals 35a, 35b, 35c are spectral means (for example, dichroic mirrors), and 36a, 36b, 36c are projection lenses, 40a, 40b, 40c are relay lenses, and 45 is an image processing unit. The other components and the function are the same as in Fig. 2.

The embodiments of the invention have the following characteristics.
(1) Using the image intensifier with high speed response gate, a blur-free, clear particle image of a particle flowing at high speed is obtained by a lamp light source of a relatively long luminous time such as a xenon lamp, without using a pulse laser light source of short luminous time and large light output.
(2) Since an incoherent light source such as a xenon lamp is used as the light source, a particle image without interference fringe may be obtained. The lamp is an inexpensive and small light source, and the apparatus may thus be of low cost and small size.
(3) When the particle image is separated into red, green and blue images, and image intensifiers and video cameras are provided for individual images, a color image which was difficult to obtain with a monochromatic light (laser light source) can be obtained.
(4) Even if the light source is continuously operated a blur-free sharp image is obtained.

Having described preferred embodiments of the invention with reference to the accompanying drawings, it is to be understood that the invention is not limited to those precise embodiments, and that various changes and modifications may be effected thereto by one skilled in the art without departing from the scope of the invention.

## Claims

1. An imaging flow cytometer for forming a sheath flow by passing sheath liquid around a sample flow containing particles (16), and for detecting a particle (16) in the sheath flow when the particle enters a particle detection region, the cytometer comprising:
a light source (28) for imaging the particle (16) in the sheath flow by emitting light when the particle (16) is in an imaging region downstream of the particle detection region;
a first image intensifier (38) having a high speed gate for intensifying an image of the particle (16) produced by the light source (28);
first imaging means (42) for capturing the intensified image produced by the first image intensifier (38); and
an image processing unit (44) for processing an image signal from the first imaging means (42).

2. An imaging flow cytometer according to claim 1, further comprising a signal processing unit (24) arranged, in response to a particle detection signal (S1) indicating detection of the particle (16) in the particle detection region, to generate a trigger signal (S2) for activating the light source (28) a specific time period after the particle detection signal (S1) and, while the light source (28) is activated, to generate a gate signal (S3) for opening the gate of each image intensifier (38).

3. An imaging flow cytometer according to claim 1, wherein the light source (28) is arranged to be continuously activated, and the imaging flow cytometer further comprises a signal processing unit (24) arranged, in response to a particle detection signal (S1) indicating detection of the particle (16) in the particle detection region, to generate a gate signal (S3) for opening the gate of each image intensifier (38) a specific time period after the particle detection signal (S1).

4. An imaging flow cytometer according to any one of claims 1 to 3, further comprising spectral means (35) for dividing an image of the particle (16) produced by the light source (28) into red, green and blue images;
second and third image intensifiers (38b, 38c) each having a high speed gate, the three image intensifiers (38a, 38b, 38c) being arranged to intensify respective ones of the red, green and blue images; and
second and third imaging means (42b, 42c), the three imaging means (42a, 42b, 42c) being arranged to capture the intensified images produced by respective ones of the image intensifiers (38a, 38b, 38c);
wherein the image processing unit (45) is arranged to process red, green and blue image signals from the three imaging means (42a, 42b, 42c).

5. An imaging flow cytometer according to any one of claims 1 to 4, wherein each imaging means (42, 42a, 42b, 42c) is a video camera.

6. An imaging flow cytometer according to any one of claims 1 to 5, wherein the light source (28) is an incoherent light source.
